# EUROPÄISCHE PATENTANMELDUNG

(11) **EP 2 837 307 A1**
(43) Veröffentlichungstag der Anmeldung: **18.02.2015**
(21) Anmeldenummer: 13180178.9
(22) Anmeldetag: 13.08.2013
(51) Int. Cl.: A47B 47/02, F16B 12/50, A47B 57/44

(54) **Modulares Gestell**

(71) Anmelder: Zurecon AG, 8003 Zürich (CH)
(72) Erfinder: Pfluger, Gerd, 4625 Oberbuchsiten (CH)
(74) Vertreter: Rutz & Partner

(57) **Zusammenfassung**

Das modulare Gestell (1), das in Garagen, Kellern, Lagerhallen und Werkstätten vorteilhaft installierbar ist, umfasst wenigstens eine metallene Montagestruktur (10) mit zwei miteinander verbindbaren Stützmodulen (101, 102), die je zwei Hauptstützen (11A, 11B; 11C, 11D) aufweisen, die durch eine Horizontalstrebe (12A; 12B) miteinander verbunden sind, und mit wenigstens einer Deckplatte (2), die von der Montagestruktur (10) getragen wird. Erfindungsgemäss ist die U-Profile-förmige und mit Längslochungen (125) versehene Horizontalstrebe (12A; 12B) jedes Stützmoduls (101; 102) beidseits durch je ein Gelenk (81) mit einer der U-Profileförmigen und mit Längslochungen (115) versehenen Hauptstützen (11A, 11B; 11C, 11D) verbunden. Ferner ist die Horizontalstrebe (12A; 12B) jedes Stützmoduls (101; 102) beidseits je mit wenigstens einem ersten Kopplungselement (6A, 6B) versehen, welches mit einem an der zugeordneten Hauptstütze (11A; 11B; 11C; 11D) vorgesehenen zweiten Kopplungselement (7A, 7B) in der Position koppelbar ist, in der diese Hauptstütze (11A; 11B; 11C; 11D) senkrecht zur zugeordneten Horizontalstrebe (12A; 12B) ausgerichtet ist.

## Beschreibung

Die Erfindung betrifft ein modulares Gestell insbesondere für Garagen, Keller, Lagerhallen und Werkstätten.

Für Garagen, Keller, Lagerhallen und Werkstätten werden üblicherweise robuste Gestelle benötigt, die schwere Lasten aufnehmen können. Für derartige Gestelle werden oft Montagestrukturen verwendet, welche aus metallenen Einzelteilen bestehen, die miteinander verschweisst sind. Derartige Gestelle sind normalerweise sehr tragfähig, aber aufwändig in der Herstellung. Ein besonders hoher Herstellungsaufwand resultiert, falls Anpassungen an individuelle Bedürfnisse des Anwenders erforderlich sind.

Alternativ werden modulare Gestelle verwendet, die eine Montagestruktur mit Einzelteilen aufweisen, die der Anwender selbst zusammenbaut. Aus der US2009/0277854A1 ist ein modulares Gestell bekannt, das zwei Stützmodule aufweist, die je zwei vertikale Pfosten aufweisen, die durch zwei horizontal verlaufende Querstreben und eine diagonal verlaufende Querstrebe miteinander verbunden sind. Die Pfosten und die horizontal verlaufenden Querstreben sind miteinander verschweisst. Während die anwenderseitige Installation dieser modularen Gestelle relativ einfach ist, ergibt sich wiederum der Nachteil, dass die Fertigung der Stützmodule einen relativ hohen Aufwand verursacht.

Der vorliegenden Erfindung liegt daher die Aufgabe zugrunde, ein verbessertes modulares Gestell zu schaffen.

Insbesondere ist ein modulares Gestell zu schaffen, welches mit geringem Aufwand und insbesondere ohne die Ausführung von Schweissarbeiten gefertigt werden kann.

Das modulare Gestell soll mit geringem Aufwand an die vom Anwender gewünschten Abmessungen angepasst werden können, so dass Lagerräume mit geringem Aufwand individuell ausgestattet werden können.

Die Anpassung der modularen Gestelle an die Anforderungen des Anwenders soll bei der Herstellung automatisch oder halbautomatisch mit minimalem Aufwand durchführbar sein. Für die modularen Gestelle sollen einfache und leicht bearbeitbare Elemente verwendbar sein.

Die modularen Gestelle sollen mit geringem Raumbedarf gelagert und geliefert werden können. Die Installation der modularen Gestelle soll am Installationsort praktisch ohne Instruktionen einfach und schnell durchführbar sein.

Diese Aufgabe wird mit einem modularen Gestell gelöst, welches die in Anspruch 1 angegebenen Merkmale aufweist. Vorteilhafte Ausgestaltungen der Erfindung sind in weiteren Ansprüchen angegeben.

Das modulare Gestell, das in Garagen, Kellern, Lagerhallen und Werkstätten vorteilhaft installierbar ist, umfasst wenigstens eine metallene Montagestruktur mit zwei miteinander verbindbaren Stützmodulen, die je zwei Hauptstützen aufweisen, die durch eine Horizontalstrebe miteinander verbunden sind, und mit wenigstens einer Deckplatte, die von der Montagestruktur getragen wird.

Erfindungsgemäss ist die U-Profile-förmige und mit Längslochungen versehene Horizontalstrebe jedes Stützmoduls beidseits durch je ein Gelenk mit einer der U-Profile-förmigen und mit Längslochungen versehenen Hauptstützen verbunden. Ferner ist die Horizontalstrebe jedes Stützmoduls beidseits je mit wenigstens einem ersten Kopplungselement versehen, welches mit einem an der zugeordneten Hauptstütze vorgesehenen zweiten Kopplungselement in der Position koppelbar ist, in der diese Hauptstütze senkrecht zur zugeordneten Horizontalstrebe ausgerichtet ist.

Die Verbindung der Profilelemente jedes Stützmoduls erfolgt durch einfache Gelenke, vorzugsweise durch einen einfachen Gelenkbolzen.

Die beiden Stützmodule werden vorzugsweise durch ein Profilelement miteinander verbunden, welches vorzugsweise dasselbe U-Profil wie die Horizontalstreben aufweist.

Die Montagestrukturen können somit vorteilhaft aus vorzugsweise identischen Profilelementen aufgebaut werden. Ein Verschweissen der Profilelemente wird vorteilhaft vermieden. Durch die Verbindung der Profilelemente mittels Gelenken können die Stützmodulen aufgefaltet und vorzugsweise vollständig zusammengefaltet und in der jeweils passenden Konfiguration gelagert oder transportiert werden.

Zur Konfektionierung eines erfindungsgemässen Gestells nach den Wünschen des Anwenders können die einzelnen Profilelemente wahlweise zugeschnitten werden. Die Parameter für ein Gestell mit bestimmten Abmessungen können berechnet und an Produktionsautomaten oder an einen Halbautomaten ausgegeben werden. Modulare Gestelle können daher abwechselnd in unterschiedlichen Ausgestaltungen seriell und ohne Produktionsunterbruch gefertigt werden. In vorzugsweisen Ausgestaltungen wird ein Produktionsautomat eingesetzt, welcher die gefertigten Gestelle entsprechend kennzeichnet, so dass sie leicht einer Bestellung zugeordnet werden können.

In einer weiteren vorzugsweisen Ausgestaltung bestehen die Hauptstützen und/oder die Horizontalstreben und/oder die Querstreben aus wenigstens einem ersten und einem zweiten Profilteil, die axial gegeneinander verschiebbar sind. In dieser Ausgestaltung kann der Anwender die Höhe, Breite und/oder Tiefe des Gestells wahlweise einstellen. Das erste U-Profilteil mit dem grösseren Querschnitt weist vorzugsweise Seitenstücke mit nach innen geneigten Enden auf, welche das zweite U-Profilteil, das einen geringeren Querschnitt aufweist, aufnehmen und halten können.

Das erfindungsgemässe modulare Gestell weist gegenüber dem Stand der Technik daher wesentliche Vorteile auf. Zusätzlich zu den genannten Vorteilen ist zu beachten, dass das Gestell mit einer beliebigen Höhe aufgebaut und zu einem späteren Zeitpunkt mit wenigen Handgriffen modifiziert, insbesondere erweitert und erhöht werden kann.

Besonders vorteilhaft ist, dass das modulare Gestell ohne den Einbau von Schrauben und ohne Werkzeug montiert werden kann. Sofern Schrauben vorgesehen sind, werden diese vorzugsweise bereits durch den Hersteller montiert, wonach der Anwender lediglich noch vorgesehene Flügelmuttern manuell festziehen kann.

In vorzugsweisen Ausgestaltungen werden die Hauptstützen der Montagestrukturen durch vorzugsweise gelochte Platten oder Hakenschienen schraubenlos miteinander verbunden. Die Platten oder Hakenschienen können auch ein integraler Bestandteil der Hauptstützen selbst sein.

Die Kopplung der Hauptstützen relativ zu den senkrecht dazu stehenden Horizontalstreben erfolgt vorzugsweise automatisch. Bei der Drehung Hauptstützen können die Kopplungselemente ineinander Einrasten oder anderweitig formschlüssig ineinander eingreifen. Dabei drehen sich die Hauptstützen beim Anheben der Querstreben automatisch in die gewünschte Lage. Das modulare Gestell ist daher praktisch selbstinstallierend. Die Abdeckplatten oder Tablare werden in vorzugsweisen Ausgestaltungen zudem von den Hauptstützen fixiert, so dass sie nicht befestigt werden müssen.

Besonders vorteilhaft ist, dass für das modulare Gestell keine weiteren Bestrebungen erforderlich sind, weshalb das modulare Gestell von jeder Seite beladen werden kann. Weiterhin wird die Sicht auf die waren nicht behindert. Sicht blenden oder Wände können jedoch wahlweise eingebaut werden.

Die U-Profile der Hauptstützen, der Horizontalstreben und vorzugsweise der Querstreben umfassen ein vorzugsweise gelochtes Mittelstück mit beidseits daran vorgesehenen und senkrecht dazu ausgerichteten Seitenstücken, die paarweise Längslochungen aufweisen, die parallel zur Längsachse der U-Profile ausgerichtet sind und paarweise auf gleicher Höhe liegen.

Somit können die erfindungsgemässen Montagestrukturen einfach und kostengünstig aus praktisch identischen Profilelementen zusammengebaut werden.

Die Gelenke können mit wenigen Handgriffen montiert werden und umfassen vorzugsweise einen Gelenkbolzen, welcher durch ein ausgewähltes Paar der Längslochungen der Horizontalstreben und durch ein dazu korrespondierendes Paar der Längslochungen der zugeordneten Hauptstütze hindurch geführt wird. Durch Einsetzen von vier Gelenkbolzen können somit die beiden Stützmodule eine Montagestruktur bereitgestellt werden.

Jeder Gelenkbolzen ist vorzugsweise Teil einer ersten Verbindungsgarnitur, welche zusätzlich eine der Fixierung des Gelenkbolzens dienende Schraubenmutter und vorzugsweise wenigstens eine Unterlagscheibe aufweist. Die Verbindungsgarnitur besteht somit aus wenigen einfach montierbaren Elementen.

Vorzugsweise ist jeder der Gelenkbolzen durch das letzte Paar der Längslochungen an einem Endstück der zugeordneten Horizontalstrebe und durch das zweitletzte Paar der Längslochungen am Endstück der zugeordneten Hauptstütze hindurch geführt. Auf diese Weise wird sichergestellt, dass die oberen Endstücke der Hauptstützen mit dem letzten Paar der Längslochungen die Deckplatte, welche auf die Horizontalstreben abgelegt wird, überragen und in Position halten.

Auch die Querstrebe, welche die Horizontalstreben der Stützmodule miteinander verbindet, kann in einfacher Weise montiert werden. Dazu werden die Endstücke der Querstrebe je stirnseitig an der zugeordneten Horizontalstrebe durch eine zweite Verbindungsgarnitur gehalten, die ein in die Längslochungen der Querstrebe einhängbares Halteelement und einen mit der zugeordneten Horizontalstrebe koppelbaren Verbindungsbolzen aufweist, mittels dessen das Halteelement fest gezogen werden kann.

Die Kopplungselemente, mittels denen die Hauptstützen gegenüber den senkrecht dazu stehenden Horizontalstreben fixierbar sind, können in einfacher Weise in die Profilelemente integriert werden, ohne dass zusätzliche Vorrichtungsteile erforderlich sind. Anstelle von Schweissverbindungen werden somit einfache und stabile mechanische Kupplungen vorgesehen.

Vorzugsweise sind die ersten Kopplungselemente als Ausnehmungen in den Seitenstücken des U-Profils der Horizontalstreben eingeformt oder eingeschnitten. In die Ausnehmungen sind die zweiten Kopplungselemente einsenkbar, die aus den Seitenstücken des U-Profils der Hauptstützen ausgeschnitten und vorzugsweise parallel zum Mittelstück des zugehörigen U-Profils gegeneinander ausgerichtet werden. Alternativ können die ersten Kopplungselemente in den Hauptstützen und die zweiten Kopplungselemente in den Horizontalstreben vorgesehen sein.

In vorzugsweisen Ausgestaltungen weisen das U-Profil der Hauptstützen einerseits und das U-Profil der Horizontalstreben andererseits unterschiedliche Querschnitte auf, so dass jede Hauptstütze durch das U-Profil der zugehörigen Horizontalstrebe oder jede Horizontalstrebe durch das U-Profil der zugehörigen Hauptstütze aufgenommen werden kann.

Alternativ weist wenigstens eines der einander zugewandten Endstücke der Hauptstützen und der Horizontalstreben ein gekürztes oder mit einem wenigstens einem Längsschlitz versehenes Mittelstück auf, so dass die einander zugewandten Endstücke der Hauptstützen und der Horizontalstreben unabhängig von ihrem Querschnitt ineinander verschiebbar und gegeneinander drehbar sind.

Das modulare Gestell kann beliebig erweitert werden und mehrere Montagestrukturen aufweisen, die nebeneinander und/oder übereinander angeordnet sind. In die oberen Endstücke der Hauptstützen der ersten Montagestruktur wird vorzugsweise je ein Verbindungsstück eingesetzt, mittels denen die Hauptstützen einer darüber liegenden zweiten Montagestruktur stabil gehalten werden können.

Nachfolgend wird die Erfindung anhand von Zeichnungen näher erläutert. Dabei zeigt:

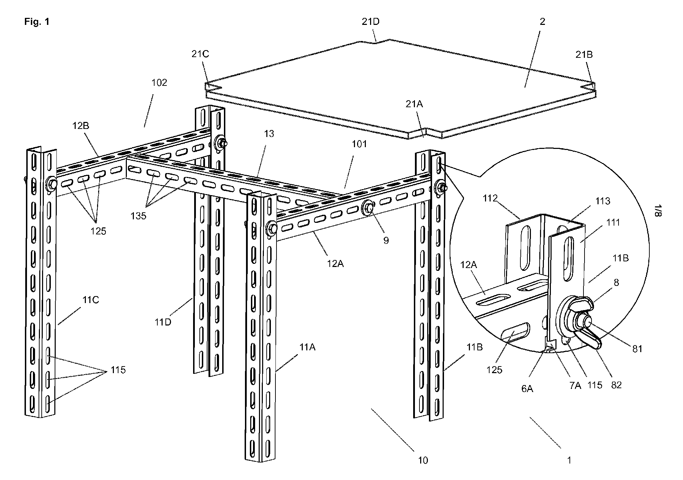

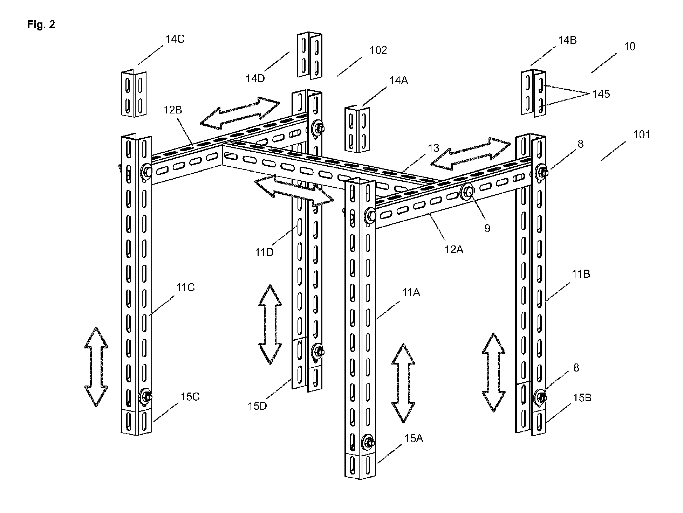

- Fig. 1: ein erfindungsgemässes modulares Gestell 1 in der einfachsten Konfiguration mit einer Deckplatte 2, die auf eine Montagestruktur 10 aufsetzbar ist, die zwei durch eine Querstrebe 13 miteinander verbundene Stützmodule 101, 102 aufweist, die je zwei Hauptstützen 11A, 11B bzw. 11C, 11D aufweist Fig. 2 die je durch eine Horizontalstrebe 12A bzw. 12B miteinander verbunden sind; die Montagestruktur 10 von Figur 1 mit verlängerbaren Hauptstützen 11A, 11B, 11C, 11D und Verbindungsstücken 14A, 14B, 14C, 14D, mittels denen die Montagestruktur 10 mit einer darüber liegenden identischen Montagestruktur 10 verbindbar ist;
- Fig. 3: die Deckplatte 2 von Figur 1 sowie die Montagestruktur 10 von Figur 2 von oben gesehen mit den Verbindungsstücken 14A, 14B, 14C, 14D, die in die Hauptstützen 11A, 11B, 11C, 11D eingesetzt sind;
- Fig. 4: die Montagestruktur 10 von Figur 2 von oben gesehen mit einer darauf liegenden transparenten Deckplatte 2;
- Fig. 5a-b: eine erste Verbindungsgarnitur 8 mit einem Gelenkbolzen 81, mittels dessen die einander zugewandten Endstücke der vierten Hauptstütze 11D und der zweiten Horizontalstrebe 12B gelenkig miteinander verbindbar sind, und mit Kopplungselementen 6A, 6B; 7A, 7B, die in die vierte Hauptstütze 11D und in die zweite Horizontalstrebe 12B integriert sind;
- Fig. 6: eine zweite Verbindungsgarnitur 9 mit einem Verbindungsbolzen 91, mittels dessen das stirnseitig an der zweiten Horizontalstrebe 12B anliegende Endstück der Querstrebe 13 gehalten ist;
- Fig. 7: zwei übereinanderliegende Montagestrukturen 10A, 10B, deren Profilteile nach unten geöffnet und axial zueinander ausgerichtet sind;
- Fig. 8a: die übereinander liegenden Hauptstützen 11C der Montagestrukturen 10A, 10B von Figur 7, die durch ein plattenförmiges gelochtes Verbindungsstück 14 und Verbindungselemente 80 miteinander verbindbar sind; und
- Fig. 8b: die übereinander liegenden Hauptstützen 11C der Montagestrukturen 10A, 10B von Figur 7, die durch ein plattenförmiges Verbindungsstück 14 miteinander verbindbar sind, dass mit in dieselbe Richtung oder in entgegengesetzte Richtungen weisenden Haken 145, 145' versehen ist, die in die Längslochungen 115 der Hauptstützen 11C eingreifen können.

Figur 1 zeigt ein erfindungsgemässes modulares Gestell 1 in der einfachsten Konfiguration mit einer Deckplatte 2, die auf eine Montagestruktur 10 aufsetzbar ist. Die Montagestruktur 10 umfasst zwei miteinander verbundene Stützmodule 101, 102, die je zwei Hauptstützen 11A, 11B bzw. 11C, 11D aufweisen, die je durch eine Horizontalstrebe 12A bzw. 12B miteinander verbunden sind. Zur Verbindung der beiden Stützmodule 101, 102 ist eine Querstrebe 13 vorgesehen, deren Endstücke mit den beiden Horizontalstreben 12A bzw. 12B verbunden sind.

Die vier Hauptstützen 11A, 11B, 11C, 11D, die beiden Horizontalstreben 12A, 12B und die Querstrebe 13 sind als U-Profile ausgestaltet, die ein Mittelstück 113 mit zwei senkrecht dazu stehenden Seitenstücken 111, 112 aufweist, wie dies die Detaildarstellung in Figur 1 zeigt. Die Mittelstücke 113 und die Seitenstücke 111, 112 der U-Profile weisen Längslochungen 115, 125, 135 auf, die sich parallel zur Längsachse der U-Profile erstrecken. Zumindest die Längslochungen 115, 125, 135 in den Seitenstücken 101, 102 liegen paarweise auf derselben Höhe, so dass ein Bolzen senkrecht zur Längsachse des U-Profils durch ein Paar von Längslochungen 115, 125, 135 hindurchgeführt und in dieser Ausrichtung entlang der Längsachse des U-Profils verschoben werden kann, soweit dies die Längslochungen 115, 125, 135 erlauben. Ferner lassen sich zwei derart miteinander verbundene U-Profile gegeneinander drehen, soweit dies deren Abmessungen erlauben. Dieser Sachverhalt wird bei der Montagestruktur 10 von Figur 1 genutzt, um die Hauptstützen 11A, 11B, 11C, 11D und die Horizontalstreben 12A, 12B gelenkig miteinander zu verbinden.

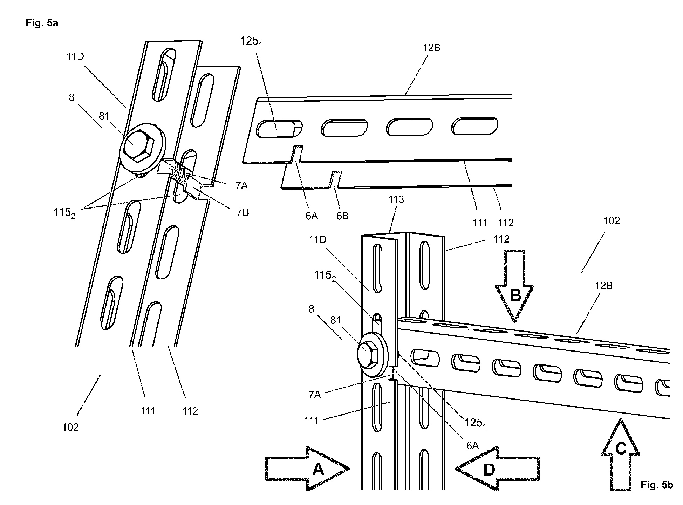

Für jede Verbindung ist eine erste Verbindungsgarnitur 8 vorgesehen, die einen Gelenkbolzen 81 umfasst, welcher durch paarweise nebeneinanderliegende Längslochungen 115, 125 der Hauptstützen 11A, 11B, 11C, 11D und der Horizontalstreben 12A, 12B hindurch geschoben wurde, wie dies die Detaildarstellung von Figur 1 zeigt. Diese Verbindung sowie die gegenseitige Arretierung der Hauptstützen 11A, 11B, 11C, 11D und der Horizontalstreben 12A, 12B mittels Kopplungselementen 6A, 6B und 7A, 7B werden nachstehend mit Bezug auf die Figuren 5a und 5b näher erläutert. In der Detaildarstellung von Figur 1 ist gezeigt, dass die Sechskantmutter 82 vorteilhaft durch eine Flügelmutter 82 ersetzt werden kann, die ohne Werkzeug betätigbar ist.

In der in Figur 1 gezeigten Ausgestaltung weisen die Hauptstützen 11A, 11B, 11C, 11D einen etwas grösseren Profilquerschnitt auf, als die Horizontalstreben 12A, 12B, so dass die Horizontalstreben 12A, 12B in den Profilquerschnitt der Hauptstützen 11A, 11B, 11C, 11D eingesetzt werden konnten. Die Querstrebe 13 weist vorzugsweise dieselben Abmessungen auf, wie die Horizontalstreben 12A, 12B. Die Horizontalstreben 12A, 12B und die Querstrebe 11 sind nach unten geöffnet und definieren mit ihrem Rücken bzw. dem Mittelstück 113 des U-Profils eine Auflageebene, auf der die Deckplatte 2 gelagert werden kann.

Damit die Deckplatte 2 sicher gehalten werden kann und dass auf diese Montagestruktur 10 eine weitere Montagestruktur 10 aufgesetzt werden kann, überragen die Endstücke der Hauptstützen 11A, 11B, 11C, 11D die Auflageebene. Zu diesem Zweck sind die Gelenkbolzen 81 nicht durch das letzte Paar, sondern durch das zweitletzte Paar der Längslochungen 115 in den Seitenstücken der U-Profile der Hauptstützen 11A, 11B, 11C, 11D hindurch geführt. Oberhalb der Auflageebene liegen daher die oberen Endstücke der Hauptstützen 11A, 11B, 11C, 11D mit einem Paar von Längslochungen 115 in den Seitenstücken 111, 112 des U-Profils frei.

Die Deckplatte 2, die von der Montagestruktur 10 abgehoben gezeigt ist, ist rechteckig ausgestaltet und weist im Bereich der Ecken Ausnehmungen 21A, 21B, 21C, 21D auf, welche den Durchtritt der Endstücke der Hauptstützen 11A, 11B, 11C, 11D erlauben. Die auf die Montagestruktur 10 aufgesetzte Deckplatte 2 wird daher durch die Hauptstützen 11A, 11B, 11C, 11D sicher gehalten.

Figur 2 zeigt die Montagestruktur 10 von Figur 1 mit Verbindungsstücken 14A, 14B, 14C, 14D, mittels denen die Montagestruktur 10 mit einer darüber liegenden identischen Montagestruktur 10 verbindbar ist. Die Verbindungsstücke 14A, 14B, 14C, 14D können oben und unten in die Endstücke der Hauptstützen 11A, 11B, 11C, 11D eingesetzt werden, so dass die Montagestruktur 10 oben und unten durch weitere vorzugsweise identische Montagestrukturen 10 ergänzt werden kann. Die Verbindungsstücke 14A, 14B, 14C, 14D weisen vorzugsweise dasselbe U-Profil auf wie die Horizontalstreben 12A, 12B und sind vorzugsweise ebenfalls mit identischen Längslochungen 145 versehen. Die Verbindungsstücke 14A, 14B, 14C, 14D können in die Hauptstützen 11A, 11B, 11C, 11D eingesetzt und wahlweise verschraubt werden.

Figur 2 zeigt ferner, dass die Montagestruktur 10 vorteilhaft aus teleskopisch verlängerbaren Hauptstützen 11A, 11B, 11C, 11D und/oder teleskopisch verlängerbaren Horizontalstreben 12A, 12B und/oder einer teleskopisch verlängerbaren Querstrebe 13 gebildet werden kann. Ferner ist gezeigt, dass in die unteren Endstücke der Hauptstützen 11A, 11B, 11C, 11D je ein Teleskopelement 15A, 15B, 15C, 15D eingesetzt und mit einer ersten Verbindungsgarnitur in der gewünschten Lage fixiert ist. Die gezeigten Teleskopelemente 15A, 15B, 15C, 15D sind identisch zu den Verbindungsstücken 14A, 14B, 14C, 14D ausgestaltet, weisen jedoch vorzugsweise eine Länge auf, die etwa zwei Drittel oder drei Viertel der Länge der Hauptstützen 11A, 11B, 11C, 11D entspricht, so dass die Hauptstützen 11A, 11B, 11C, 11D nach Wunsch verlängert oder verkürzt werden können.

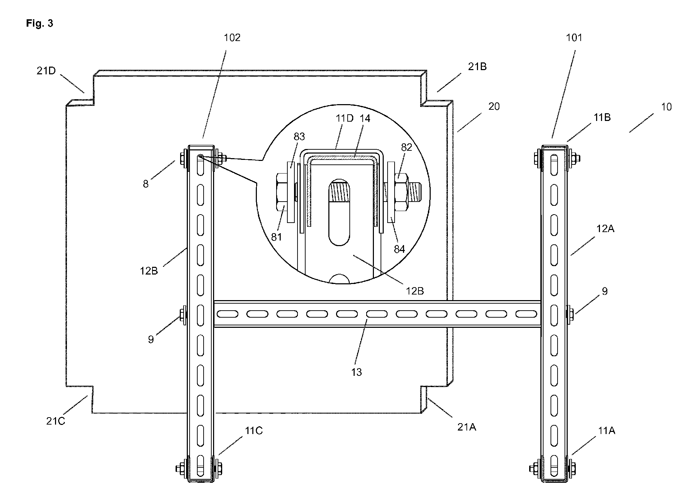

Figur 3 zeigt die Deckplatte 2 von Figur 1 sowie die zusammengebaute Montagestruktur 10 von Figur 2 von oben gesehen mit den Verbindungsstücken 14A, 14B, 14C, 14D, die in die Hauptstützen 11A, 11B, 11C, 11D eingesetzt sind.

In einer Detaildarstellung ist ferner eine erste Verbindungsgarnitur 8 gezeigt, welche die zweite Horizontalstrebe 12B und die senkrecht dazu ausgerichtete vierte Hauptstütze 11D miteinander verbindet. Es ist gezeigt, dass der Gelenkbolzen 81 mit einem Gewindeschaft durch die Paare von Längsöffnungen 115, 125 in der Hauptstütze 11D und der Horizontalstrebe 12B hindurch geführt und auf der anderen Seite in eine Schraubenmutter 82 eingedreht ist. Der Kopf des Gelenkbolzens 81 und die Schraubenmutter 82 sind ferner durch Unterlagscheiben 83 und 84 gelagert.

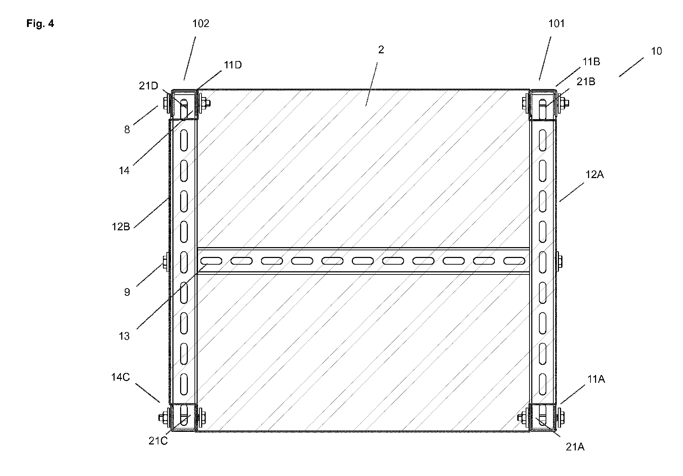

Figur 4 zeigt die Montagestruktur 10 von Figur 3 von oben gesehen mit einer darauf liegenden transparenten Deckplatte 2 aus Glas oder Kunststoff.

Die Figuren 5a und 5b zeigen die erste Verbindungsgarnitur 8 der Detaildarstellung von Figur 3 mit dem Gelenkbolzen 81, mittels dessen die einander zugewandten Endstücke der dritten Hauptstütze 11C und der zweiten Horizontalstrebe 12B gelenkig miteinander verbindbar sind.

Figur 5a zeigt dem Gelenkbolzen 81, der durch das zweite Paar von Längslochungen 115₂ in der Hauptstütze 11D hindurch geführt ist. In Figur 5b ist der Gelenkbolzen 81 durch das zweite Paar von Längslochungen 115₂ in der Hauptstütze 11D und durch das erste Paar von Längslochungen 125₁ in der Horizontalstrebe 12B hindurch geführt. Das Endstück der Horizontalstrebe 12B ist im Profilquerschnitt der Hauptstütze 11D aufgenommen und kann darin vorzugsweise um plus und minus 90° gedreht werden. Damit die Drehung vollzogen werden kann wird die Horizontalstrebe 12B so weit zurückgezogen, wie es die Längslochungen 125₁ erlauben. Gegebenenfalls ist das Endstück der Horizontalstrebe 12B so weit beschnitten, dass kein Hindernis bei der Drehung auftritt.

Damit die Hauptstütze 11D um 90° gegen die Horizontalstrebe 12B gedreht und fixiert werden kann, sind die Hauptstütze 11D und die Horizontalstrebe 12B mit zueinander korrespondierenden Kopplungselementen 6A, 6B bzw. 7A, 7B versehen, welche bei dieser Position der Drehung ineinander eingreifen können.

Die Kopplungselemente 6A, 6B bzw. 7A, 7B sind in dieser Ausgestaltung in einfacher Weise in die Hauptstütze 11D und in die Horizontalstrebe 12B integriert. In die Seitenstücke 111, 112 des U-Profils der Horizontalstrebe 12B sind Ausnehmungen 6A, 6B eingeschnitten. Das ausgeschnittene Material wurde entfernt. In die Seitenstücke 111, 112 des U-Profils der Hauptstütze 11D sind ebenfalls Ausnehmungen eingeschnitten. Das freigelegte Material wurde hingegen nach innen gebogen und bildet zwei gegeneinander gerichtete Kopplungsplatten 7A, 7B, die in die Ausnehmungen 6A, 6B in der Horizontalstrebe 12B eingreifen können. Dazu wird die durch den Gelenkbolzen 81 mit der Hauptstütze 11D verbundene und senkrecht dazu stehende Horizontalstrebe 12B angehoben, gegen die Hauptstütze 11D geführt und abgesenkt, so dass die Kopplungsplatten 7A, 7B in die Ausnehmungen 6A, 6B eintreten können, wie dies in Figur 5b gezeigt ist.

Figur 5b illustriert die Schritte zur Verbindung der Hauptstütze 11D und der Horizontalstrebe 12B. Im ersten Schritt A wird die Hauptstütze 11D mit der Horizontalstrebe 12B verbunden und um 90° dazu gedreht. Im zweiten Schritt B wird die gegen die Hauptstütze 11D geführte Horizontalstrebe 12B nach unten gedrückt, so dass die die Kopplungsplatten 7A, 7B in die Ausnehmungen 6A, 6B eintreten können. Diese Schritte zeigen die Bedeutung der Längslochungen 1152, 1251, welche es erlauben, die Hauptstütze 11D und der Horizontalstrebe 12B gegeneinander zu verschieben und zu drehen, bis die Kopplungselemente 6A, 6B bzw. 7A, 7B ineinander eingreifen können.

Figur 5b zeigt ferner, dass die Kopplungselemente 6A, 6B bzw. 7A, 7B voneinander gelöst werden können, indem die Horizontalstrebe 12B bei Schritt C angehoben und die Hauptstütze 11D bei Schritt D gedreht wird. Die weiteren Hauptstützen 11A, 11B, 11C werden in gleicher Weise mit der zugeordneten Horizontalstrebe 12A bzw. 12B verbunden.

Vorteilhaft können auch andere Kopplungselemente 6A, 6B bzw. 7A, 7B in die zueinander korrespondierenden Seitenstücke 111, 112 der U-Profile eingearbeitet werden. Beispielsweise können die ersten Kopplungselemente 6A, 6B durch rechteckige oder quadratische Fensteröffnungen in den Seitenstücken 111, 112 gebildet werden. In die Fensteröffnungen können die zweiten Kopplungselemente 7A, 7B eingreifen, die als Zungen ausgestaltet sind, die durch einen U-förmigen Schnitt in den korrespondierenden Seitenstücken 111, 112 freigelegt und nach aussen gebogen wurden.

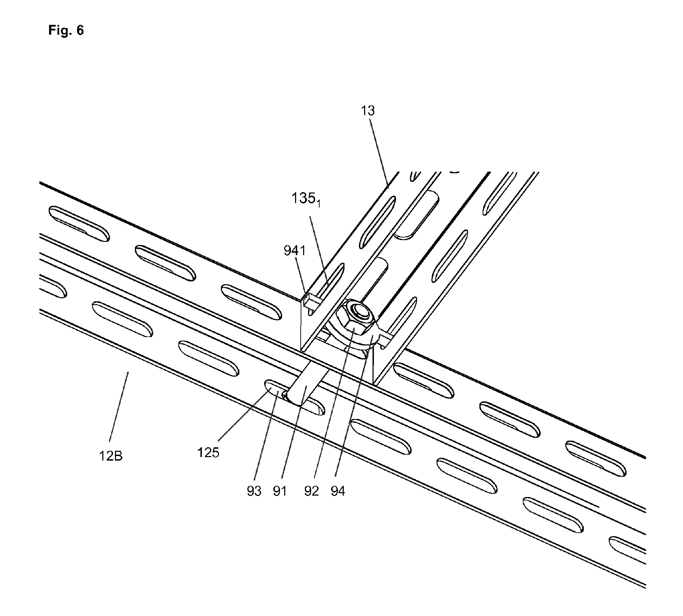

Figur 6 zeigt eine zweite Verbindungsgarnitur 9 mit einem Verbindungsbolzen 91, mittels dessen das stirnseitig an der zweiten Horizontalstrebe 12B anliegende Endstück der Querstrebe 13 gehalten ist. Der Verbindungsbolzen 91 ist durch ein paar von Längslochungen 125 in der Horizontalstrebe 12B hindurch geführt und hält innerhalb des Querschnitts der Querstrebe 13 ein Halteelement 94, welches mit Hebeln 941 seitlich in das erste Paar von Längslochungen 1351 in der Querstrebe 13 eingreift. Durch Festziehen des Verbindungsbolzens 91 kann die Querstrebe 13 somit gegen die Horizontalstrebe 12B gezogen werden. Dazu kann der Verbindungsbolzen 91 in ein Gewinde eingreifen, welches im Halteelement 94, oder, wie in Figur 6 gezeigt, in einer Schraubenmutter 92 vorgesehen ist. Die erste und die zweite Verbindungsgarnitur 8, 9 sind in vorzugsweisen Ausgestaltungen gezeigt. Alternative Verbindungsmöglichkeiten sind weniger vorteilhaft, können aber ebenfalls eingesetzt werden. Beispielsweise können Flanschelemente an den U-Profilen vorgesehen werden.

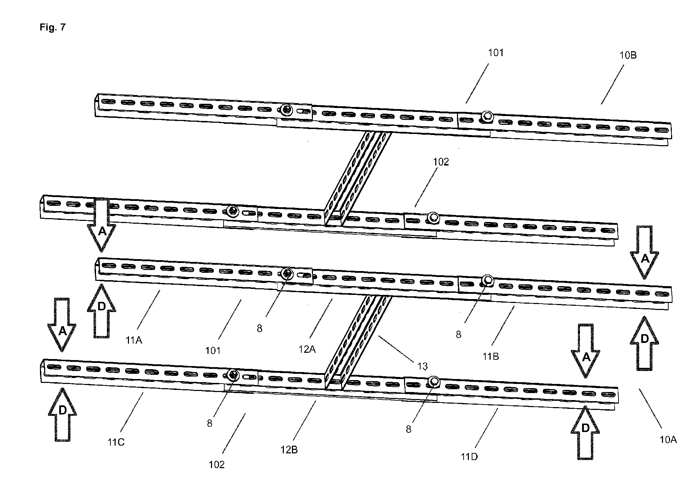

Figur 7 zeigt zwei übereinanderliegende Montagestrukturen 10A, 10B mit Stützmodulen 102, 102, deren Profilteile nach unten geöffnet und axial zueinander ausgerichtet sind. Die Hauptstützen 11A und 11B bzw. 11C und 11D sind axial zu den Horizontalstreben 12A bzw. 12B ausgerichtet. Mit Bezug auf Figur 5b wurden die Schritte zur Montage und Demontage der Montagestruktur 10 beschrieben. In Figur 7 sind die Montagestrukturen 10A, 10B vor dem ersten Schritt A oder nach dem letzten Schritt D gezeigt, bei dem die axiale Ausrichtung der Hauptstützen 11A und 11B bzw. 11C und 11D und der Horizontalstreben 12A bzw. 12B erfolgte. In dieser Ausrichtung können die Montagestrukturen 10A, 10B raumsparend gestapelt werden. Ferner können die Montagestrukturen 10A, 10B mit minimalem Aufwand vollständig demontiert und wieder aufgebaut werden.

Aus Figur 7 ist ersichtlich, dass die Querstreben 13 erfasst werden können, wonach die Hauptstützen 11 automatisch nach unten gedreht werden und durch Festziehen der Verbindungsschrauben 81 oder der Flügelmuttern 82 rasch fixiert werden können.

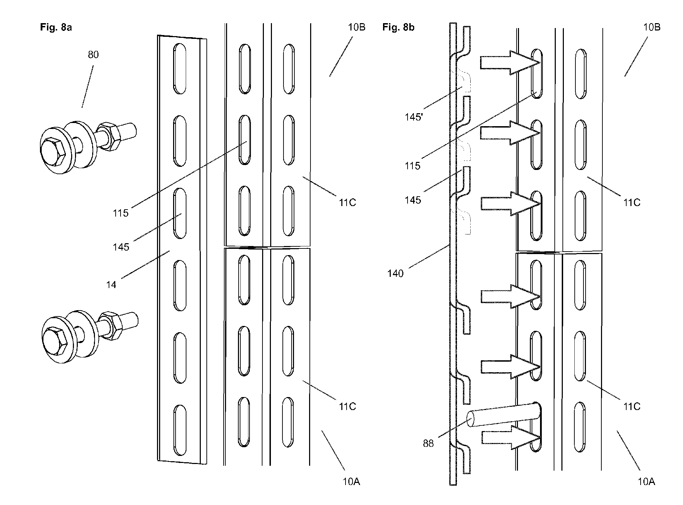

Die Figuren 8a und 8b zeigen weitere Möglichkeiten zur Verbindung der Profilelemente, insbesondere der Hauptstützen 11 der aufeinander stehenden Montagestrukturen 10A, 10B beispielsweise von Figur 7.

Figur 8a zeigt die übereinander liegenden Hauptstützen 11C der Montagestrukturen 10A, 10B von Figur 7, die durch ein plattenförmiges gelochtes Verbindungsstück 14 und Verbindungselemente 80 miteinander verbindbar sind. Das Verbindungsstück 14 weist Längslochungen 145 auf, die zu den Längslochungen 115 der Hauptstützen 11C korrespondieren. Durch die genannten Längslochungen 145 und 115 können Verbindungselemente 80, beispielsweise Schrauben oder Bolzen hindurch geführt werden.

Figur 8b zeigt ein als Hakenschiene ausgestaltetes Verbindungsstück 140, welches mit in dieselbe Richtung oder in entgegengesetzte Richtungen weisenden Haken 145, 145' versehen ist, die in die Längslochungen 115 der Hauptstützen 11C eingreifen können. Sofern die Haken 145 in unterschiedliche Richtungen weisen, kann die Hakenschiene 140 in die untere Hauptstütze 11C eingesetzt werden, wonach die obere Hauptstütze 11C derart auf die untere Hauptstütze 11C aufgesetzt wird, dass die Haken 144 in die Längslochungen 115 eingreifen. Alternativ kann eine Hakenschiene 140 verwendet werden, deren Haken 145, 145' in dieselbe Richtung weisen. Die Montagestrukturen 10A, 10B können dabei mit dem Hauptstützen 11C aufeinander gestellt werden, wonach die Hakenschiene 140 in einfacher Weise eingehängt werden kann. Vorzugsweise wird die eingehängte Hakenschiene 140 in der Folge mit einem Verbindungselement, beispielsweise einem Bolzen, fixiert. Auf diese Weise können die Montagestrukturen 10A, 10B Schrauben los miteinander verbunden werden.

Die gelochten Platten 14 oder die Hakenschienen 140 können auch integraler Bestandteil der Hauptstützen 11 sein. Eine am Ende einer Hauptstütze 11 vorgesehene Hakenschiene 140 kann daher in das Endstück der benachbarten Hauptstütze 11 eingreifen. Überlappende Teile der aufeinander stehenden Hauptstützen 11 können daher in einfachster Weise miteinander verbunden werden.

## Patentansprüche

1. Modulares Gestell (1) insbesondere für Garagen, Keller, Lagerhallen und Werkstätten, umfassend wenigstens eine metallene Montagestruktur (10) mit zwei miteinander verbindbaren Stützmodulen (101, 102), die je zwei Hauptstützen (11A, 11B; 11C, 11D) aufweisen, die durch eine Horizontalstrebe (12A; 12B) miteinander verbunden sind, und mit wenigstens einer Deckplatte (2), die von der Montagestruktur (10) getragen wird, **dadurch gekennzeichnet, dass** die U-Profile-förmige und mit Längslochungen (125) versehene Horizontalstrebe (12A; 12B) jedes Stützmoduls (101; 102) beidseits durch je ein Gelenk (81) mit einer der U-Profile-förmigen und mit Längslochungen (115) versehenen Hauptstützen (11A, 11B; 11C, 11D) verbunden ist, und dass die Horizontalstrebe (12A; 12B) jedes Stützmoduls (101; 102) beidseits je mit wenigstens einem ersten Kopplungselement (6A, 6B) versehen ist, welches mit einem an der zugeordneten Hauptstütze (11A; 11B; 11C; 11D) vorgesehenen zweiten Kopplungselement (7A, 7B) in der Position koppelbar ist, in der diese Hauptstütze (11A; 11B; 11C; 11D) senkrecht zur zugeordneten Horizontalstrebe (12A; 12B) ausgerichtet ist.

2. Modulares Gestell (1) nach Anspruch 1, **dadurch gekennzeichnet, dass** die U-Profile der Hauptstützen (11A, 11B, 11C, 11D) und der Horizontalstreben (12A, 12B) ein vorzugsweise gelochtes Mittelstück (113) mit beidseits daran vorgesehenen und senkrecht dazu ausgerichteten Seitenstücken (111, 112) umfassen, die paarweise Längslochungen (125, 115) aufweisen, die in axialer Richtung der U-Profile auf gleicher Höhe liegen.

3. Modulares Gestell (1) nach Anspruch 2, **dadurch gekennzeichnet, dass** jedes der Gelenke (81) einen Gelenkbolzen (81) umfasst, welcher durch ein ausgewähltes Paar der Längslochungen (125) der Horizontalstreben (12A; 12B) und durch ein dazu korrespondierendes Paar der Längslochungen (115) der zugeordneten Hauptstütze (11A, 11B; 11C, 11D) hindurch geführt ist.

4. Modulares Gestell (1) nach Anspruch 3, **dadurch gekennzeichnet, dass** jeder Gelenkbolzen (81) durch das letzte Paar (125₁) der Längslochungen (125) an einem Endstück der zugeordneten Horizontalstrebe (12A, 12B) und durch das zweitletzte (115₂) Paar der Längslochungen (115) am Endstück der zugeordneten Hauptstütze (11A, 11B; 11C, 11D) hindurch geführt ist.

5. Modulares Gestell (1) nach einem der Ansprüche 1-4, **dadurch gekennzeichnet, dass** der Gelenkbolzen (81) Teil einer ersten Verbindungsgarnitur (8) ist, welche zusätzlich eine der Fixierung des Gelenkbolzens (81) dienende Schraubenmutter (82) und vorzugsweise wenigstens eine Unterlagscheibe (83, 84) aufweist.

6. Modulares Gestell (1) nach einem der Ansprüche 1-5, **dadurch gekennzeichnet,**
**dass** die ersten Kopplungselemente (6A, 6B) Ausnehmungen in den Seitenstücken (101) des U-Profils der Horizontalstreben (12A; 12B) sind, in die die zweiten Kopplungselemente (7A, 7B) einsenkbar sind, die aus den Seitenstücken (101) des U-Profils der Hauptstützen (11A; 11B; 11C; 11D) ausgeschnitten und zumindest annähernd parallel zum Mittelstück des zugehörigen U-Profils gegeneinander ausgerichtet sind; oder dass die zweiten Kopplungselemente (7A, 7B) Ausnehmungen in den Seitenstücken (101) des U-Profils der Hauptstützen (11A; 11B; 11C; 11D) sind, in die die ersten Kopplungselemente (6A, 6B) einsenkbar sind, die aus den Seitenstücken (101) des U-Profils der Horizontalstreben (12A; 12B) ausgeschnitten und zumindest annähernd parallel zum Mittelstück des zugehörigen U-Profils gegeneinander ausgerichtet sind

7. Modulares Gestell (1) nach einem der Ansprüche 1-6, **dadurch gekennzeichnet, dass** die U-Profile der Hauptstützen (11A, 11B, 11C, 11D) einerseits und die U-Profile der der Horizontalstreben (12A, 12B) andererseits unterschiedliche Querschnitte aufweisen, so dass jede Hauptstütze (11A, 11B, 11C, 11D) durch das U-Profil der zugehörigen Horizontalstrebe (12A, 12B) oder jede Horizontalstrebe (12A, 12B) durch das U-Profil der zugehörigen Hauptstütze (11A, 11B, 11C, 11D) aufgenommen werden kann.

8. Modulares Gestell (1) nach einem der Ansprüche 1-6, **dadurch gekennzeichnet, dass** wenigstens eines der einander zugewandten Endstücke der Hauptstützen (11A, 11B, 11C, 11D) und der Horizontalstreben (12A, 12B) ein gekürztes oder mit einem wenigstens einem Längsschlitz versehenes Mittelstück (113) aufweist, so dass die einander zugewandten Endstücke der Hauptstützen (11A, 11B, 11C, 11D) und der Horizontalstreben (12A, 12B) unabhängig vom Querschnitt ineinander verschiebbar und gegeneinander drehbar sind.

9. Modulares Gestell (1) nach einem der Ansprüche 1-8, **dadurch gekennzeichnet, dass** die Horizontalstreben (12A, 12B) der beiden Stützmodule (101, 102) durch eine mit Längslochungen (135) versehene U-Profil-förmige Querstrebe (13) miteinander verbunden sind, deren Querschnitt vorzugsweise demjenigen der Horizontalstreben (12A, 12B) entspricht.

10. Modulares Gestell (1) nach Anspruch 9, **dadurch gekennzeichnet, dass** die Endstücke der Querstrebe (13) je stirnseitig an der zugeordneten Horizontalstrebe (12A; 12B) anliegen und durch eine zweite Verbindungsgarnitur (9) mit dieser verbunden sind, die ein in die Längslochungen (135) der Querstrebe (13) einhängbares Halteelement (92) und einen mit der zugeordneten Horizontalstrebe (12A; 12B) koppelbaren Verbindungsbolzen (91) aufweist, mittels dessen das Halteelement (92) fest gezogen werden kann.

11. Modulares Gestell (1) nach Anspruch 10, **dadurch gekennzeichnet, dass** auf die Montagestruktur (10) mit den Hauptstützen (11A, 11B; 11C, 11D), die vertikal zu den Horizontalstreben (12A; 12B) und zur Querstrebe (13) ausgerichtet sind, eine rechteckige Deckplatte (2) aufgesetzt ist, an deren Ecken vorzugsweise quadratische Ausnehmungen (24A, 24B, 24C, 24D) vorgesehen sind, die der Aufnahme der Endstücke der zugeordneten Hauptstützen (11A, 11B; 11C, 11D) dienen, welche die Deckplatte (2) überragen.

12. Modulares Gestell (1) nach einem der Ansprüche 1 - 11, **dadurch gekennzeichnet, dass** zwei oder mehrere Montagestrukturen (10A, 10B) übereinander angeordnet sind, deren Hauptstützen (11A, 11B; 11C, 11D) je durch wenigstens ein separates oder mit der zugehörigen Hauptstütze (11A; 11B; 11C; 11D) einstückig verbundenes Verbindungsstück (14A; 14B; 14C; 14D) miteinander verbunden sind.

13. Modulares Gestell (1) nach Anspruch 12, **dadurch gekennzeichnet, dass** das Verbindungsstück (14) ein Profilelement, wie ein C-Profil, ein U-Profil oder eine gelochte Platte ist oder dass das Verbindungsstück (140) eine Hakenschiene ist mit Haken, die vorzugsweise in dieselbe Richtung oder in entgegengesetzte Richtungen weissen.

14. Modulares Gestell (1) nach einem der Ansprüche 1 - 13, **dadurch gekennzeichnet, dass** jedes der Stützmodule (101, 102) derart ausrichtbar ist, dass die Hauptstützen (11A, 11B; 11C, 11D) und die zugehörigen Horizontalstreben (12A; 12B) mit nach derselben Seite geöffnetem U-Profil axial ausrichtbar sind.

15. Modulares Gestell (1) nach einem der Ansprüche 1 - 14, **dadurch gekennzeichnet, dass** die Hauptstützen (11A, 11B, 11C, 11D) und/oder die Horizontalstreben (12A; 12B) und/oder die Querstreben (13) aus wenigstens zwei axial gegeneinander verschiebbaren U-Profilteilen bestehen.
